(19) Europäisches Patentamt
European Patent Office
Office européen des brevets

(11) Publication number : **0 503 865 A2**

(12) # EUROPEAN PATENT APPLICATION

(21) Application number : **92301962.4**

(51) Int. Cl.$^5$ : **C09D 163/00,** C09D 133/00

(22) Date of filing : **09.03.92**

(30) Priority : **12.03.91 GB 9105128**

(43) Date of publication of application :
**16.09.92 Bulletin 92/38**

(84) Designated Contracting States :
**AT BE CH DE ES FR GB IT LI NL**

(71) Applicant : **CIBA-GEIGY AG**
**Klybeckstrasse 141**
**CH-4002 Basel (CH)**

(72) Inventor : **Bennett, Russell**
**8 St. Thomas Close**
**Camberton, Cambridge (GB)**

(74) Representative : **Sparrow, Kenneth D. et al**
**CIBA-GEIGY PLC. Patent Department, Central Research, Hulley Road**
**Macclesfield, Cheshire SK10 2NX (GB)**

(54) **Coating compositions.**

(57) A powder coating composition comprising A) a solid epoxy resin, viz. an epoxy resin having an average of more than one vicinal epoxide group per molecule and an average epoxide equivalent weight greater than 500 ; B) a copolymer of (meth) acrylic acid and at least one ($C_1$-$C_{18}$) alkyl (meth) acrylate ; and C) a curing agent for the epoxy resin A).

EP 0 503 865 A2

The present invention relates to coating compositions, in particular to powder coating compositions which provide matt, smooth coatings.

There is an increasing commercial interest in the application of a coating via a powder coating composition, rather than by the traditional liquid coating compositions.

For certain applications, it is desired that the powder coating composition should provide a matt finish on the article when coated. Examples of such applications include the internal fittings of vehicles, where a low level of reflected light is required.

There have been several different techniques attempted to control the mattness of finishes laid down on articles, using a powder coating composition.

One approach has been to add to the powder coating composition an additive which does not react with any component in the composition. Such inert additives include finely-ground silica or talcum. The use of such inert additives has the disadvantages that they can impair the impact strength of the coating, as well as the free-flowing characteristics of the powder composition, making the composition difficult to fluidize and spray, when being applied to the article to be coated.

Another group of additives which has been considered, is that comprising organic acid salts which act as specific curing agents for the resin component of the powder coating. Again, the impact strength of the final cured coating is often inadequate, and the matt values can be sensitive to the bake times and temperatures used.

Another approach has involved the modification of the film-forming resin itself. For example, in U.S. Patent Specification No: 4419495, there are described powder coatings comprising a solid, curable epoxy resin containing more than one vicinal epoxy group and, as at least part of the curing agent, a polymer prepared only from ethylene and acrylic acid as monomers, the polymer having a melt index of about 30 to about 40,825, and used in a quantity sufficient to lower the 60° gloss of the coating, when cured.

Surprisingly, we have now found that by using a (meth)acrylic acid/alkyl (meth) acrylate copolymer as a modifier for the basic epoxy resin film-former, superior matt and smoothness values are obtained from the final films, relative to those of U.S. Patent No: 4419495.

Accordingly, the present invention provides a powder coating composition comprising A) a solid epoxy resin, viz an epoxy resin having an average of more than one vicinal epoxide group per molecule and an average epoxide equivalent weight greater than 500; B) a copolymer of (meth)acrylic acid and at least one ($C_1$-$C_{18}$) alkyl (meth) acrylate; and C) a curing agent for the epoxy resin component A).

The component A) of the compositions of the present invention may be produced by advancing any conventional liquid polyepoxide resin with a molecular deficiency of a difunctional compound having two groups which are capable of reacting with epoxide groups. The liquid polyepoxide starting materials may be, e.g., those containing at least two terminal groups of formula:

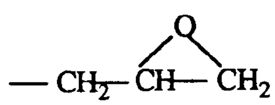

I

directly attached to an atom or atoms of oxygen, nitrogen or sulphur.

As examples of such resins there may be mentioned polyglycidyl esters, obtained by reaction of a compound containing two or more carboxylic acid groups per molecule, with epichlorohydrin or glycerol dichlorohydrin, in the presence of an alkali. Such polyglycidyl esters may be derived from aliphatic polycarboxylic acids, e.g. oxalic acid, succinic acid, glutaric acid, pimelic acid, suberic acid, azelaic acid, sebacic acid, and dimerised or trimerised linoleic acid; from cycloaliphatic polycarboxylic acids such as tetrahydrophthalic acid, 4-methyltetrahydrophthalic acid, hexahydrophthalic acid, and 4-methylhexa-hydrophthalic acid; and from aromatic polycarboxylic acids, such as phthalic acid, isophthalic acid, and terephthalic acid.

Further examples are polyglycidyl ethers obtainable by reaction of a compound containing at least two free alcoholic hydroxyl and/or phenolic hydroxyl groups per molecule with epichlorohydrin or glycerol dichlorohydrin under alkaline conditions or, alternatively, in the presence of an acid catalyst and subsequent treatment with alkali. These ethers may be made from acyclic alcohols such as ethylene glycol, diethylene glycol, and higher poly(oxyethylene) glycols, propane- 1,2-diol and poly(oxypropylene) glycols, propane-1,3-diol, butane-1,4-diol, poly(oxytetramethylene)glycols, pentane- 1,5-diol, hexane-2,4,6-triol, glycerol, 1,1,1-trimethylolpropane, pentaerythritol, sorbitol, and poly(epichlorohydrin); from cycloaliphatic alcohols such as resorcitol, quinitol, bis(4-hydroxycyclohexyl)methane, 2,2-bis(4-hydroxycyclohexyl)propane, and 1,1-bis(hydroxymethyl)-cyclohex-3-ene; and from alcohols having aromatic nuclei, such as N,N-bis(2-hydroxyethyl)aniline and p,p[1]-bis(2-hydroxyethyl-amino)diphenylmethane. Or they may be made from mononuclear phenols, such as resorcinol and hydroquinone, and from polynuclear phenols, such as bis(4-hydroxyphenyl)methane, 4,4[1] -dihydroxydiphenyl, bis(4-hydroxyphenyl) sulphone, 1,1,2,2-tetrakis(4-hydroxyphenyl)-methane, 2,2-bis(4-hydroxyphenyl)propane, 2,2-bis(3,5-dibromo-4-hydroxyphenyl)propane (otherwise known as tetrabromobisphenol A), and novolaks formed from aldehydes such as formaldehyde, acetaldehyde, chloral, and furfuraldehyde, with phenols such as phenol itself, and phenol substituted in the ring by chlorine atoms or by alkyl groups each containing up to nine carbon atoms, such as 4-chloro-phenol, 2-methylphenol, and 4-tert.butylphenol.

Poly(N-glycidyl) compounds include, for example, those obtained by dehydrochlorination of the reaction products of epichlorohydrin with amines containing at least two amino-hydrogen atoms such as aniline, n-butylamine, bis(4-aminophenyl)methane, and bis(4-methylaminophenyl)methane; triglycidyl isocyanurate; and N,N[1]-diglycidyl derivatives of cyclic alkylene ureas, such as ethyleneurea and 1,3-propyleneurea, and hydantoins such as 5,5-dimethylhydantoin.

Examples of poly(S-glycidyl) compounds are di-S-glycidyl derivatives of dithiols such as ethane- 1,2-dithiol and bis(4-mercaptomethylphenyl) ether.

Other polyepoxides include those obtained from ethylenically unsaturated glycidyl esters of monocarboxylic acids, such as glycidyl acrylate, by homopolymerisation and by copolymerisation with $\alpha$-ethylenically unsaturated compounds such as acrylate esters, methacrylate esters, styrene, and maleic and fumaric esters.

Polyepoxides having the 1,2-epoxide groups attached to different kinds of hetero atoms may be employed, e.g. the N,N,O-triglycidyl derivative of 4-aminophenol, the glycidyl ether-glycidyl ester of salicylic acid, N-glycidyl-N[1]-(2-glycidyloxypropyl)-5,5-dimethylhydantoin, and 2-glycidyloxy-1,3-bis(5,5-dimethyl-1-glycidylhydantoin-3-yl)propane.

Also, if desired, a mixture of polyepoxides may be used. Preferred polyepoxides are polyglycidyl ethers and polyglycidyl esters. Specific preferred polyepoxides are diglycidyl ethers of 2,2-bis(4-hydroxyphenyl)propane, of bis(4-hydroxyphenyl)methane, having a 1,2-epoxide content of more than 1.0 equivalent per kilogram. Typical difunctional materials suitable for reaction with the liquid polyepoxide resin include bisphenols, especially bisphenol A and tetrabromobisphenol A; mononuclear dihydric phenols such as resorcinol; and dicarboxylic acids such as hexahydrophthalic acid.

The advancement is preferably conducted by heating the liquid polyepoxide and the difunctional material together in the presence of an advancement catalyst e.g. a quaternary phosphonium or ammonium compound e.g. ethyltriphenylphosphonium chloride, -bromide, -iodide, -acetate or -phosphate; tetrabutylphosphonium chloride, -bromide-, -iodide or -acetate; benzyltrimethyl- ammonium chloride or tetramethylammonium hydroxide; tertiary amines e.g. benzyl dimethylamine or tri-isopropyl amine; or mixtures of these.

Component B) of the powder coating composition is a copolymer of i) acrylic acid or methacrylic acid with ii) at least one ($C_1$-$C_{18}$) alkyl (meth) acrylate. The ($C_1$-$C_{18}$) alkyl (meth) acrylate comonomer may be, e.g., methyl-, ethyl-, n-propyl, isopropyl-, n-butyl-, n-hexyl-, n-octyl, 2-ethylhexyl-, n-decyl-, n-dodecyl-, n-tetradecyl-, n-hexadecyl- or n-octadecyl acrylate or the corresponding methacrylates or a mixture, preferably not more than two, of these. The ratio of the (meth) acrylic acid monomer to the alkyl (meth) acrylate preferably ranges from 1:500 to 1:5, especially from 1:200 to 1:20.

Based on 100 parts by weight of the solid epoxy resin component, component A), component B) may be present in the powder coating compositions of the present invention, in amounts ranging from 1 to 50 parts by weight, preferably from 3 to 25 parts by weight.

The relative proportions of components A) and B) in the compositions of the present invention have been found to be important in producing final films having the best combination of a matt (low gloss) and smooth finish.

The curing agent, component C) of the powder coating compositions of the present invention, may be an aliphatic amine; dicyandiamide; an aromatic amine such as bis(3-aminophenyl)- and bis(4-aminophenyl)-sulphone and bis(4-aminophenyl) methane, which are usually used together with an accelerator such as a $BF_3$-amine complex; a carboxylic acid such as a polycarboxylic acid anhydride, methylbicyclo [2,2,1]-hept-5-ene-2,3-dicarboxylic acid anhydride, pyromellitic acid dianhydride and benzophenone tetracarboxylic acid dianhydride; a phenol compound e.g. a phenol novolak; or a polyester e.g. those derived from polycarboxylic acids such as phthalic acid or terephthalic acid, and polyols such as ethylene glycol or trimethylol propane.

The amount of the curing agent, component C), present in the powder coating compositions of the invention may range from 1 to 75% by weight preferably from 4 to 50% by weight, based on the epoxy resin component A).

The powder coating compositions of the present invention may also contain a curing agent accelerator, e.g. an amino-substituted pyridine, an imidazole, a metal salt, a tertiary amine, a phenol or a mixture of these, preferably an imidazole such as 2-methylimidazole.

The powder coating compositions of the present invention may also contain one or more further conventional additives such as particulate fillers or pigments e.g. barytes, titanium dioxide, carbon black, silica flour, calcium carbonate or mixtures of these; flow control agents e.g. polyacrylates such as ethyl acrylate/2-ethylhexyl acrylate copolymers and poly(butyl acrylate), texture control additives, e.g. glass microspheres, metal powders and polymer powders; air release agents e.g. benzoin; gloss control additives e.g. amorphous silicas and silicic acid; and slip aids.

The powder coating compositions of the present invention may be prepared by simple mixing of the ingredients, for example in a ball mill. Alternatively, the various components may be melted together, conveniently in an extruder such as a Buss Ko-Kneader; and then the cooled mass may be ground to a powder. The powder compositions so obtained preferably have a particle size ranging from 10 to 100, especially 20 to 50 micrometres.

The present invention also provides a method of coating an article comprising applying a powder coating composition of the present invention to the article; and curing the coating so applied to the article, thereby providing an article coated with a smooth matt coating. The present invention further provides an article so coated.

The powder coating composition may be applied on to the article, e.g. a metal, glass, plastics or fibre-reinforced plastics substrate, by electrostatic spraying or by using a fluidized bed, which may be electrostatic. The composition is preferably applied by means of an electrostatic spray gun using, e.g., a voltage ranging from 10 to 100 kilovolts. The thickness of the coating applied may be varied by varying the number of passes of the gun over the surface to be coated. After application of the powder composition of the invention, the coated article is baked at a temperature ranging e.g. from 150°C to 250°C, for a time ranging e.g. from 5 to 25 minutes to cure the powder coating and provide a smooth, matt finish.

Epoxy resins having the following formula (1) or (2) are used in Examples 18 to 21:

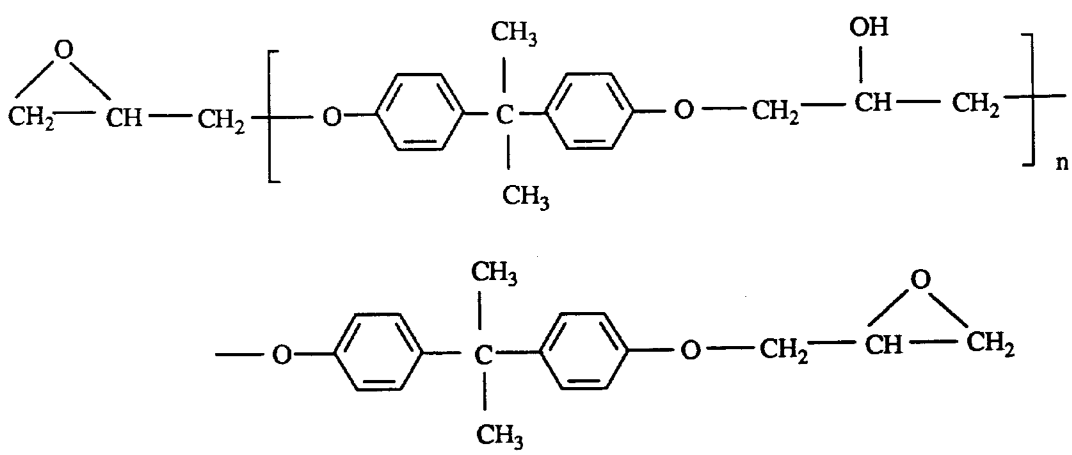

(1)

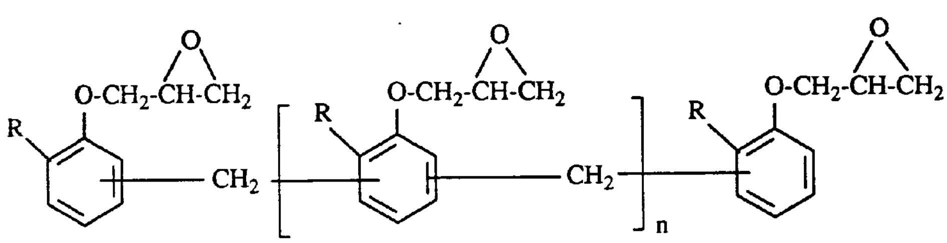

(2)

Resin I

An advanced (chain extended) bisphenol A epoxy resin of formula (1) in which the average value of n is 4, epoxide equivalent is 715-750, and softening point (DIN 51920) is 95-101°C.

Resin II

An advanced (chain extended) bisphenol A epoxy resin of formula (1) in which the average value of n is 3, the epoxide equivalent is 570-595 and the softening point (DIN 51920) is 82-90°C.

Resin III

An advanced (chain extended) bisphenol A epoxy resin of formula (1) in which the average value of n is 5, containing 20% by weight of an epoxy phenol novolak of formula (2) in which the average of n is 1.6, having an epoxide equivalent weight of 518-846 and a softening point (DIN 51920) of about 90°C.

Resin IV

An advanced (chain extended) bisphenol A epoxy resin of formula (1) in which n is 5, an epoxide equivalent weight of 1000- 1100 and a softening point (DIN 51920) of about 110°C.

Resin V

An epoxy cresol novolak resin of formula (2) in which n is 2.4 and R is methyl, having an epoxide equivalent weight of 217-244 and a softening point (DIN 51920) of about 90°C.

The following Examples further illustrate the present invention.

Example 1

Heptane (100g) is charged to a 2 litre, 5-necked round bottomed, glass reaction flask fitted with a water-cooled condenser, nitrogen purge, stirrer, thermocouples and an addition funnel. Heating to 100°C and nitrogen purge are initiated on the stirred flask contents. 15 minutes later, with the system under reflux, 2-ethylhexyl acrylate (1000 g), acrylic acid (20 g) and benzoyl peroxide (1 g) are premixed and added, dropwise, to the stirred flask contents, via the addition funnel. The reaction temperature is maintained between 95°C and 105°C throughout the addition. As the polymerisation progresses, reflux is lost. 120 minutes later, with the temperature at 102°C, the addition is complete. Post reaction, at 100°C, of the stirred flask contents, is continued for 90 minutes.

After 90 minutes, the flask is set for distillation and the temperature of the stirred flask contents increased to 190°C, over 95 minutes, to distil off the heptane.

Example 2

Butan-2-ol (100g) is charged to a 2 litre, 5-necked round bottomed, glass reaction flask fitted with a water-cooled condenser, nitrogen purge, stirrer, thermocouples and an addition funnel. Heating to 100°C and nitrogen purge are initiated on the stirred flask contents. 15 minutes later, 2-ethylhexyl acrylate (1000g), acrylic acid (20g) and benzoyl peroxide (4g) are premixed and added, dropwise, to the stirred flask contents via the addition funnel. The reaction temperature is maintained between 95°C and 105°C throughout the addition. 120 minutes later, with the temperature at 102°C, the addition is complete. Post reaction at 100°C of the stirred flask contents is continued for 90 minutes.

After 90 minutes, the flask is set for distillation and the temperature of the stirred flask contents increased to 190°C over 95 minutes to distil off the butan-2-ol.

Example 3

Butan-1-ol (400g) is charged to a 2 litre, 5-necked round bottomed, glass reaction flask fitted with a water-cooled condenser, nitrogen purge, stirrer, thermocouples and an addition funnel. Heating to 120°C and nitrogen purge are initiated on the stirred flask contents. 45 minutes later, with the system under reflux, 2-ethylhexyl acrylate (400g), acrylic acid (400g) and benzoyl peroxide (2g) are premixed and added, dropwise, to the stirred flask contents, via the addition funnel. The reaction temperature is maintained between 115°C and 125°C throughout the addition. As the polymerisation progresses, reflux is lost. 2 hours later, with the temperature at 123°C, the premix is complete. Post reaction at 120°C of the stirred flask contents is continued for 60 minutes. After 60 minutes, t-butyl perbenzoate (0.5g) is added, dropwise, to the stirred flask contents. Post reaction at 120°C is continued for 70 minutes.

After 70 minutes, the flask is set for distillation and the temperature of the stirred flask contents increased to 140°C over 120 minutes to distil off the butan-1-ol.

Example 4

Heptane (100g) is charged to a 2 litre, 5-necked round bottomed, glass reaction flask fitted with a water-cooled condenser, nitrogen purge, stirrer, thermocouples and an addition funnel. Heating to 100°C and nitrogen purge are initiated on the stirred flask contents. 15 minutes later, with the system under reflux, 2-ethylhexyl acrylate (1000 g), methacrylic acid (20g) and benzoyl peroxide (2g) are premixed and added, dropwise, to the stirred flask contents, via the addition funnel. The reaction temperature is maintained between 95°C and 105°C throughout the addition. As the polymerisation progresses reflux is lost. 120 minutes later, with the temperature at 102°C, the premix is complete. Post reaction at 100°C of the stirred flask contents is continued for 90 minutes.

After 90 minutes, the flask is set for distillation and the temperature of the stirred flask contents increased to 190°C over 95 minutes to distil off the heptane.

Example 5

Heptane (200g) is charged to a 2 litre, 5-necked round bottomed, glass reaction flask fitted with a water-cooled condenser, nitrogen purge, stirrer, thermocouples and an addition funnel. Heating to 100°C and nitrogen purge are initiated on the stirred flask contents. 15 minutes later, with the system under reflux, 2-ethylhexyl acrylate (1000g), acrylic acid (10g) and benzoyl peroxide (1g) are premixed and added, dropwise, to the stirred flask contents, via the addition funnel. The reaction temperature is maintained between 95°C and 105°C throughout the addition. As the polymerisation progresses, reflux is lost. 120 minutes later, with the temperature at 102°C, the premix is complete. Post reaction at 100°C of the stirred flask contents is continued for 90 minutes.

After 90 minutes, the flask is set for distillation and the temperature of the stirred flask contents increased to 190°C over 95 minutes to distil off the heptane.

Example 6

Heptane (150g) is charged to a 1 litre, 5-necked round bottomed, glass reaction flask fitted with a water-cooled condenser, nitrogen purge, stirrer, thermocouples and an addition funnel. Heating to 100°C and nitrogen purge are initiated on the stirred flask contents. 15 minutes later, with the system under reflux, 2-ethylhexyl acrylate (250g), acrylic acid (1.5g) and benzoyl peroxide (0.25g) are premixed and added, dropwise, to the stirred flask contents, via the addition funnel. The reaction temperature is kept below 110°C throughout the addition. As the polymerisation progresses reflux is lost. 60 minutes later, with the temperature at 100°C, the addition is complete. Post reaction at 110°C of the stirred flask contents is continued for 120 minutes.

After 120 minutes, the flask is set for distillation and the temperature of the stirred flask contents increased to 190°C over 120 minutes to distil off the heptane.

Example 7

Heptane (150g) is charged to a 1 litre, 5-necked round bottomed, glass reaction flask fitted with a water-coooled condenser, nitrogen purge, stirrer, thermocouples and an addition funnel. Heating to 100°C and nitrogen purge are initiated on the stirred flask contents. 15 minutes later, with the system under reflux, butyl acrylate (174g), acrylic acid (5g) and benzoyl peroxide (0.25g) are premixed and added, dropwise, to the stirred flask contents, via the addition funnel. The reaction temperature is kept below 110°C throughout the addition. As the polymerisation progresses reflux is lost. 60 minutes later, with the temperature at 100°C, the addition is complete. Post reaction at 110°C of the stirred flask contents is continued for 120 minutes.

After 120 minutes, the flask is set for distillation and the temperature of the stirred flask contents increased to 190°C over 120 minutes to distil off the heptane.

Example 8

Heptane (150g) is charged to a 1 litre, 5-necked round bottomed, glass reaction flask fitted with a water-cooled condenser, nitrogen purge, stirrer, thermocouples and an addition funnel. Heating to 100°C and nitrogen purge are initiated on the stirred flask contents. 15 minutes later, with the system under reflux, lauryl methacrylate (345g), acrylic acid (5g) and benzoyl peroxide (0.25g) are premixed and added, dropwise, to the stirred flask contents via the addition funnel. The reaction temperature is kept below 110°C throughout the addition.

As the polymerisation progresses, reflux is lost. 60 minutes later, with the temperature at 100°C, the addition is complete. Post reaction at 110°C of the stirred flask contents is continued for 120 minutes.

After 120 minutes the flask is set for distillation and the temperature of the stirred flask contents increased to 190°C over 120 minutes to distil off the heptane.

Example 9

Heptane (150g) is charged to a 1 litre, 5-necked round bottomed, glass reaction flask fitted with a water-cooled condenser, nitrogen purge, stirrer, thermocouples and an addition funnel. Heating to 100°C and nitrogen purge are initiated on the stirred flask contents. 15 minutes later, with the system under reflux, butyl acrylate (174g), acrylic acid (2.5 g) and benzoyl peroxide (0.25 g) are premixed and added, dropwise, to the stirred flask contents, via the addition funnel. The reaction temperature is kept below 110°C throughout the addition. As the polymerisation progresses, reflux is lost. 60 minutes later, with the temperature at 100°C, the addition is complete. Post reaction at 110°C of the stirred flask contents is continued for 120 minutes.

After 120 minutes, the flask is set for distillation and the temperature of the stirred flask contents increased to 190°C over 120 minutes to distil off the heptane.

Example 10

Heptane (150g) is charged to a 1 litre, 5-necked round bottomed, glass reaction flask fitted with a water-cooled condenser, nitrogen purge, stirrer, thermocouples and an addition funnel. Heating to 100°C and nitrogen purge are initiated on the stirred flask contents. 15 minutes later, with the system under reflux, lauryl methacrylate (345g) acrylic acid (2.5g) and benzoyl peroxide (0.25g) are premixed and added, dropwise, to the stirred flask contents, via the addition funnel. The reaction temperature is kept below 110°C throughout the addition. As the polymerisation progresses, reflux is lost. 60 minutes later, with the temperature at 100°C, the addition is complete. Post reaction at 110°C of the stirred flask contents is continued for 120 minutes.

After 120 minutes the flask is set for distillation and the temperature of the stirred flask contents increased to 190°C over 120 minutes to distil off the heptane.

Example 11

Heptane (150 g) is charged to a 1 litre, 5-necked round bottomed, glass reaction flask fitted with a water-cooled condenser, nitrogen purge, stirrer, thermocouples and an addition funnel. Heating to 100°C and nitrogen purge are initiated on the stirred flask contents. 15 minutes later, with the system under reflux, 2-ethylhexyl acrylate (125g), plus butyl acrylate (87g) and acrylic acid (5g) and benzoyl peroxide (0.25g) are premixed and added, dropwise, to the stirred flask contents via the addition funnel. The reaction temperature is kept below 110°C throughout the addition. As the polymerisation progresses, reflux is lost. 60 minutes later, with the temperature at 100°C, the addition is complete. Post reaction at 110°C of the stirred flask contents is continued for 120 minutes.

After 120 minutes, the flask is set for distillation and the temperature of the stirred flask contents increased to 190°C over 120 minutes to distil off the heptane.

Example 12

Heptane (400g) is charged to a 1 litre, 5-necked round bottomed, glass reaction flask fitted with a water-cooled condenser, nitrogen purge, stirrer, thermocouples and an addition funnel. Heating to 100°C and nitrogen purge are initiated on the stirred flask contents. 15 minutes later, with the system under reflux, 2-hydroxy ethyl acrylate (50g), 2-ethyl hexyl acrylate (200g), acrylic acid (2 g) and benzoyl peroxide (0.25 g) are pre-mixed and added, dropwise, to the stirred flask contents, via the addition funnel. The reaction temperature is maintained between 95°C and 110°C throughout the addition. As the polymerisation progresses reflux is lost. 60 minutes later, with the temperature at 110°C, the addition is complete. Post reaction at 110°C of the stirred flask contents is continued for 120 minutes to distil off the heptane.

After 120 minutes, the flask is set for distillation and the temperature of the stirred flask contents increased to 190°C over 120 minutes to distil off the heptane.

Example 13

Heptane (400g) is charged to a 1 litre, 5-necked round bottomed, glass reaction flask fitted with a water-cooled condenser, nitrogen purge, stirrer, thermocouples and an addition funnel. Heating to 100°C and nitrogen purge are initiated on the stirred flask contents. 15 minutes later, with the system under reflux, 2-ethyl hexyl acrylate (250 g), acrylic acid (2g) and 1,1-azobis (1-cyclohexane carbonitrile) (1g) are pre-mixed and added, dropwise, to the stirred flask contents, via the addition funnel. The reaction temperature is maintained between 95°C and 110°C throughout the addition. As the polymerisation progresses reflux is lost. 60 minutes later, with the temperature at 110°C, the addition is complete. Post reaction at 110°C of the stirred flask contents is continued for 120 minutes to distil off the heptane.

After 120 minutes, the flask is set for distillation and the temperature of the stirred flask contents increased to 190°C over 120 minutes to distil off the heptane.

Example 14

Heptane (400g) is charged to a 1 litre, 5-necked round bottomed, glass reaction flask fitted with a water-cooled condenser, nitrogen purge, stirrer, thermocouples and an addition funnel. Heating to 100°C and nitrogen purge are initiated on the stirred flask contents. 15 minutes later, with the system under reflux, 2-ethyl hexyl acrylate (250g), acrylic acid (2g) and benzoyl peroxide (1g) are pre-mixed and added, dropwise, to the stirred flask contents via the addition funnel. The reaction temperature is maintained between 95°C and 110°C throughout the addition. As the polymerisation progresses reflux is lost. 60 minutes later, with the temperature at 110°C, the addition is complete. Post reaction at 110°C of the stirred flask contents is continued for 120 minutes to distil off the heptane.

After 120 minutes, the flask is set for distillation and the temperature of the stirred flask contents increased to 190°C over 120 minutes to distil off the heptane.

Example 15

Heptane (400g) is charged to a 1 litre, 5-necked round bottomed, glass reaction flask fitted with a water-cooled condenser, nitrogen purge, stirrer, thermocouples and an addition funnel. Heating to 100°C and nitrogen purge are initiated on the stirred flask contents. 15 minutes later, with the system under reflux, 2-ethyl hexyl acrylate (250g), acrylic acid (2g) and benzoyl peroxide (0.5g) are pre-mixed and added, dropwise, to the stirred flask contents, via the addition funnel. The reaction temperature is maintained between 95°C and 110°C throughout the addition. As the polymerisation progresses, reflux is lost. 60 minutes later, with the temperature at 110°C, the addition is complete. Post reaction at 110°C of the stirred flask contents is continued for 120 minutes to distil off the heptane.

After 120 minutes the flask is set for distillation and the temperature of the stirred flask contents increased to 190°C over 120 minutes to distil off the heptane.

Example 16

Heptane (400g) is charged to a 1 litre, 5-necked round bottomed, glass reaction flask fitted with a water-cooled condenser, nitrogen purge, stirrer, thermocouples and an addition funnel. Heating to 100°C and nitrogen purge are initiated on the stirred flask contents. 15 minutes later, with the system under reflux, 2-ethyl hexyl acrylate (250 g), acrylic acid (2g) and di-t-butyl peroxide (1g) are pre-mixed and added, dropwise, to the stirred flask contents via the addition funnel. The reaction temperature was maintained between 95°C and 110° throughout the addition. As the polymerisation progresses, reflux is lost. 60 minutes later, with the temperature at 110°C, the addition is complete. Post reaction at 110°C of the stirred flask contents is continued for 120 minutes to distil off the heptane.

After 120 minutes, the flask is set for distillation and the temperature of the stirred flask contents increased to 190°C over 120 minutes to distil off the heptane.

Example 17

Heptane (400g) is charged to a 1 litre, 5-necked round bottomed, glass reaction flask fitted with a water-cooled condenser, nitrogen purge, stirrer, thermocouples and an addition funnel. 15 minutes later, with the system under reflux, 2-ethyl hexyl acrylate (250g), acrylic acid (2g) and 1,3 bis (t-butylperoxy isopropyl) benzene (1g) are pre-mixed and added, drop-wise, to the stirred flask contents, via the addition funnel. The reaction temperature is maintained between 95°C and 110°C throughout the addition. As the polymerisation progresses, reflux is lost. 60 minutes later, with the temperature at 110°C, the addition is complete. Post reaction at 110°C of the stirred flask contents is continued for 120 minutes to distil off the heptane.

After 120 minutes, the flask is set for distillation and the temperature of the stirred flask contents increased to 190°C over 120 minutes to distil off the heptane.

Example 18

Copolymers from Examples 1-17 are blended with Resin II to yield a solid product suitable for use in powder coating formulations in the following manner.

Copolymer and Resin II are charged to a 2 litre, 5-necked, round bottomed glass reaction flask which is then covered and placed in an oven at 140°C for 16 hours to melt the resins.

The flask is then removed to a fume cupboard and fitted with water-cooled condenser, nitrogen purge, stirrer and thermocouples. Heating to 160°C and nitrogen purge are initiated on the stirred flask contents. 10 minutes later, the temperature is steady at 160°C. 60 minutes later, the well-mixed resins are discharged into foil trays and allowed to cool.

Example 19

Copolymer from Example 1 is blended with Resin I using the procedure described in Example 18.

Example 20

Copolymer from Example 1 is blended with Resin III using the procedure described in Example 18.

Example 21

Copolymer from Example 1 is blended with a mixture of 10 pbw of solid Resin IV and 1 pbw of Resin V using the procedure described in Example 18.

Example 22

Formulation and Processing of Coatings

Portions of modified epoxy resins from Examples 18 to 21 are ground into granules using a Christy Hunt Spruemajor. Formulation weights, as per Table 1, of modified epoxy resin, hardener, flow agent masterbatch (GT 2874), air release additive (benzoin), titanium dioxide pigment and any further components are placed in a plastic bucket, sealed and placed on mechanical rollers to ensure a homogeneous dry blend. The dry blend formulations are then extruded in a Buss-Ko-Kneader Type PR 46 single screw extruder with zone 1 at 40°C and zone 2 at 85°C. The extrudate is immediately cooled on a cold table and then pulverised to a fine powder using a Christy Hunt Spruemaster. The pulverised powder is sieved through 75 micron (BS 410) laboratory test sieves. The 75 micron powder coating formulations are applied to degreased mild steel plates using a Controsion PET-SRF electrostatic spraying unit. The electrostatically coated plates are cured at 180°C in an Heraeus LUT 5050 EK vented fan oven; residence the of the plates is 20 minutes. After removal from the oven the plates are allowed to cool and then evaluated using the following methods:-

| | |
|---|---|
| Appearance | : Visual check of flow, cissing and other film defects. |
| Coating thickness | : Determined using a Elcometer 150 FN minitector. |
| Surface gloss | : Determined using a Sheen Instruments Data Gloss 152. |
| Reverse impact resistance | : Determined to (BS 3900:E3) using a R.E.L. falling weight impact tester. |
| Coating whiteness | : Determined using a Dr Lange WBI. |

The results of these tests are detailed in Table 1.

Materials used in powder formulations

| | |
|---|---|
| Hardener A = | - substituted dicyandiamide |
| Hardener B = | - polyester resin |
| Hardener C = | - phenol novolac |
| GT 2874 = | - 90% solid Bisphenol A epoxy resin, 10% Acronal 4 F (B A S F (U.K.) Ltd |
| $TiO_2$ = | - R-TC 4 grade (Tioxide (U.K.) Ltd |

TABLE I FORMULATION AND TEST DATA OF POWDER COATINGS

| COPOLYMER | | EPOXY RESIN BLENDED WITH COPOLYMER | | HARDENER A | HARDENER B | HARDENER C | 2-METHYL IMIDAZOLE | GT 2874 | BENZOIN | TITANIUM DIOXIDE | MODAFLOW POWDER II | SURFACE GLOSS 60° | WHITENESS | MEK RUB RESISTANCE | APPEARANCE |
|---|---|---|---|---|---|---|---|---|---|---|---|---|---|---|---|
| RESIN OF EXAMPLE | g | EPOXY RESIN | g | g | g | g | g | g | g | g | g | % | % | | |
| 1 | 53.3 | II | 266.7 | - | 400 | - | - | 80 | 8 | 440 | - | 50 | 85 | 0-1 | Textured |
| 1 | 29.1 | II | 290.9 | - | 400 | - | - | 80 | 8 | 440 | - | 80 | 87 | 0-1 | Textured |
| 1 | 2.9 | II | 317.1 | - | 400 | - | - | 80 | 8 | 440 | - | 97 | 86 | 0-1 | Textured |
| 1 | 25.0 | II | 738.0 | 37 | - | - | - | - | 8 | 440 | 16 | 32 | 81 | 2 | Fine texture |
| 1 | 25.0 | II | 738.0 | 37 | - | - | - | - | 8 | 440 | 32 | 28 | 84 | 1-2 | Fine texture |
| 1 | 25.0 | II | 578.0 | 37 | - | - | - | 160 | 8 | 440 | - | 50 | 83 | 1-2 | Fine texture |
| 1 | 100.5 | II | 502.5 | 37 | - | - | - | 160 | 8 | 440 | - | 3.3 | 82 | 2 | Fine texture |
| 1 | 128.0 | II | 640.0 | 37 | - | - | - | - | 8 | 440 | 32 | 2.3 | 81 | 3 | Fine texture |
| 1 | 100.5 | II | 503.0 | 37 | - | - | - | - | 8 | 440 | 16 | 2.7 | 82 | 2 | Fine texture |
| 1 | 50.5 | II | 554.0 | 37 | - | - | - | 160 | 8 | 440 | - | 10 | 81 | 1-2 | Fine texture |
| 1 | 8.3 | II | 595.0 | 37 | - | - | - | 160 | 8 | 440 | - | 88 | 83 | 2-3 | Textured |
| 1 | 100.5 | II | 502.5 | - | - | 89.5 | 3.0 | 160 | 8 | 450 | - | 2.5 | 65 | 0-1 | Textured |
| 2 | 29.1 | II | 290.9 | - | 400 | - | - | 80 | 8 | 440 | - | 66 | 89 | 0-1 | Almost smooth |
| 2 | 45.5 | II | 454.4 | 30 | - | - | - | 133 | 6.6 | 365 | - | 6.5 | 83 | 1-2 | Fine texture |
| 2 | 13.6 | II | 589.4 | 37 | - | - | - | 160 | 8 | 440 | - | 80 | 83 | 1 | Almost smooth |
| 3 | 106.7 | II | 213.3 | - | 400 | - | - | 80 | 8 | 440 | - | 16 | 82 | 2 | Fine texture |
| 3 | 100.7 | II | 201.3 | 18.5 | - | - | - | 80 | 8 | 220 | - | 1.5 | 81 | 5 | Fine texture |
| 4 | 53.3 | II | 266.7 | - | 400 | - | - | 80 | 8 | 440 | - | 40 | 84 | 0-1 | Fine texture |
| 4 | 29.1 | II | 290.9 | - | 400 | - | - | 80 | 8 | 440 | - | 80 | 83 | 0-1 | Textured |
| 4 | 54.8 | II | 548.2 | 37 | - | - | - | 160 | 8 | 440 | - | 14 | 83 | 2 | Fine texture |
| 4 | 4.5 | II | 598.0 | 37 | - | - | - | 160 | 8 | 440 | - | 86 | 83 | 2 | Almost smooth |
| 4 | 100.5 | II | 502.5 | 37 | - | - | - | 160 | 8 | 440 | - | 5.5 | 81 | 2-3 | Fine texture |
| 4 | 66.7 | II | 536.3 | 37 | - | - | - | 160 | 8 | 440 | - | 3.5 | 81 | 2 | Fine texture |
| 4 | 50.0 | II | 553.0 | 37 | - | - | - | 160 | 8 | 440 | - | 5 | 82 | 1-2 | Fine texture |
| 4 | 33.3 | II | 569.7 | 37 | - | - | - | 160 | 8 | 440 | - | 35 | 81 | 2 | Fine texture |
| 4 | 16.7 | II | 586.3 | 37 | - | - | - | 160 | 8 | 440 | - | 60 | 82 | 1 | Textured |
| 4 | 54.8 | II | 548.2 | - | - | 89.5 | 3.0 | 160 | 8 | 450 | - | 2.0 | 63 | 1-2 | Textured |
| 5 | 100.5 | II | 502.5 | 37 | - | - | - | 160 | 8 | 440 | - | 18 | 83 | 2 | Almost smooth |
| 5 | 50.5 | II | 555.5 | 37 | - | - | - | 160 | 8 | 440 | - | 65 | 83 | 3 | Almost smooth |
| 6 | 29.1 | II | 290.9 | 37 | 400 | - | - | 80 | 8 | 440 | - | 48 | 79 | 0-1 | Textured |
| 6 | 18.2 | II | 584.8 | 22.1 | - | - | - | 160 | 8 | 440 | - | 70 | 81 | 3-4 | Almost smooth |

TABLE 1 (cntd.... )

| COPOLYMER | | EPOXY RESIN BLENDED WITH COPOLYMER | | HARDENER A | HARDENER B | HARDENER C | 2-METHYL IMIDAZOLE | GT 2874 | BENZOIN | TITANIUM DIOXIDE | MODAFLOW POWDER II | SURFACE GLOSS 60° | WHITENESS | MEK RUB RESISTANCE | APPEARANCE |
|---|---|---|---|---|---|---|---|---|---|---|---|---|---|---|---|
| RESIN OF EXAMPLE | g | EPOXY RESIN | g | g | g | g | g | g | g | g | g | % | % | | |
| 7 | 29.1 | II | 290.9 | - | 400 | - | - | 80 | 8 | 440 | - | 75 | 85 | 1 | Textured |
| 7 | 18.2 | II | 584.8 | 37 | - | - | - | 160 | 8 | 440 | - | 32 | 82 | 1-2 | Fine texture |
| 8 | 29.1 | II | 290.9 | - | 400 | - | - | 80 | 8 | 440 | - | 80 | 90 | 1-2 | Textured |
| 8 | 18.2 | II | 584.8 | 37 | - | - | - | 160 | 8 | 440 | - | 27 | 80 | 2-3 | Smooth |
| 9 | 29.1 | II | 290.9 | - | 400 | - | - | 80 | 8 | 440 | - | 80 | 84 | 0-1 | Textured |
| 9 | 18.2 | II | 584.8 | 37 | - | - | - | 160 | 8 | 440 | - | 45 | 83 | 1-2 | Textured |
| 10 | 29.1 | II | 290.9 | - | 400 | - | - | 80 | 8 | 440 | - | 76 | 83 | 1-2 | Textured |
| 10 | 18.2 | II | 584.8 | 37 | - | - | - | 160 | 8 | 440 | - | 83 | 83 | 1-2 | Textured |
| 11 | 29.1 | II | 290.9 | - | 400 | - | - | 80 | 8 | 440 | - | 83 | 84 | 1-2 | Textured |
| 11 | 18.2 | II | 584.8 | 37 | - | - | - | 160 | 8 | 440 | - | 62 | 83 | 1-2 | Textured |
| 12 | 29.1 | II | 290.9 | - | 400 | - | - | 80 | 8 | 440 | - | 50 | 85 | 1 | Almost smooth |
| 12 | 18.2 | II | 584.8 | 37 | - | - | - | 160 | 8 | 440 | - | 10 | 79 | 2-3 | Fine texture |
| 13 | 29.1 | II | 290.9 | - | 400 | - | - | 80 | 8 | 440 | - | 70 | 85 | 0-1 | Almost smooth |
| 13 | 18.2 | II | 584.8 | 37 | - | - | - | 160 | 8 | 440 | - | 65 | 82 | 1 | Almost smooth |
| 14 | 29.1 | II | 290.9 | - | 400 | - | - | 80 | 8 | 440 | - | 65 | 82 | 0-1 | Almost smooth |
| 14 | 18.2 | II | 584.8 | 37 | - | - | - | 160 | 8 | 440 | - | 70 | 84 | 1 | Almost smooth |
| 15 | 29.1 | II | 290.9 | - | 400 | - | - | 80 | 8 | 440 | - | 70 | 87 | 1 | Almost smooth |
| 15 | 18.2 | II | 584.8 | 37 | - | - | - | 160 | 8 | 440 | - | 70 | 84 | 2 | Almost smooth |
| 16 | 29.1 | II | 290.9 | - | 400 | - | - | 80 | 8 | 440 | - | 55 | 87 | 1 | Textured |
| 16 | 18.2 | II | 584.8 | 37 | - | - | - | 160 | 8 | 440 | - | 65 | 83 | 1 | Almost smooth |
| 17 | 29.1 | II | 290.9 | - | 400 | - | - | 80 | 8 | 440 | - | 70 | 86 | 1 | Almost smooth |
| 17 | 18.2 | II | 584.8 | 37 | - | - | - | 160 | 8 | 440 | - | 75 | 84 | 2 | Almost smooth |
| 1 | 100.5 | I | 502.5 | 43 | - | - | - | 160 | 8 | 440 | - | 4.0 | 75 | 1-2 | Fine texture |
| 1 | 100.5 | III | 502.5 | 46 | - | - | - | 160 | 8 | 440 | - | 3.0 | 74 | 1-2 | Fine texture |
| 1 | 100.5 | IV/V(10:1) | 501.5 | 37 | - | - | - | 160 | 8 | 440 | - | 10 | 64 | 1-2 | Fine texture |

## Claims

1. A powder coating composition comprising A) a solid epoxy resin, viz. an epoxy resin having an average of more than one vicinal epoxide group per molecule and an average epoxide equivalent weight greater than 500; B) a copolymer of (meth) acrylic acid and at least one ($C_1$-$C_{18}$) alkyl (meth) acrylate; and C) a curing agent for the epoxy resin A).

2. A composition according to claim 1 in which the solid epoxy resin, component A), has been produced by advancing a liquid epoxide with a molecular deficiency of a difunctional compound having two groups which are reactive with epoxide groups.

3. A composition according to claim 2 in which the polyepoxide is a polyglycidyl ether or polyglycidyl ester.

4. A composition according to claim 3 in which the polyepoxide is a diglycidyl ether of 2,2-bis(4-hydroxyphenyl) propane or of bis(4-hydroxyphenyl) methane and having a 1,2-epoxide content of more than 1.0 equivalent per kilogram.

5. A composition according to any of claims 2 to 4 in which the difunctional compound is a bisphenol, a mononuclear dihydric phenol or a dicarboxylic acid.

6. A composition according to claim 5 in which the bisphenol is bisphenol A or tetrabromobisphenol A, the dihydric alcohol is resorcinol and the dicarboxylic acid is hexahydrophthalic acid.

7. A composition according to any of the preceding claims in which, in component B), the ratio of the (meth) acrylic acid component to the ($C_1$-$C_{18}$) alkyl (meth) acrylate component ranges from 1:500 to 1:5.

8. A composition according to any of the preceding claims in which component B) is 1:200 to 1:20.

9. A composition according to any of the preceding claims in which the amount of component B) present is from 1 to 50 parts by weight, based on 100 parts by weight of component A).

10. A composition according to claim 9 in which the amount of component B) present is from 3 to 25 parts by weight, based on 100 parts by weight of component A).

11. A composition according to any of the preceding claims in which the curing agent, component C), is an aliphatic amine, dicyandiamide, an aromatic amine, or carboxylic acid, a phenol compound or a polyester.

12. A composition according to any of the preceding caims in which the curing agent is present in amount of 1 to 75% by weight, based on the epoxy resin compound A).

13. A composition according to claim 12 in which the curing agent is present in amount of 4 to 50% by weight, based on the epoxy resin component A).

14. A composition according to any of the preceding claims in which a curing agent accelerator is present.

15. A composition according to any of the preceding claims in which there are also present one or more of a particulate filler or pigment; a flow control agent; a texture control additive; an air release agent; a gloss control additive; and a slip aid.

16. A method of coating an article comprising applying a powder coating, according to any of the preceding claims, to an article to be coated; and curing the article so coated.

17. An article, when coated by a method claimed in claim 16.